# EUROPÄISCHE PATENTANMELDUNG

(11) **EP 3 011 864 A1**
(43) Veröffentlichungstag der Anmeldung: **27.04.2016**
(21) Anmeldenummer: 15189680.0
(22) Anmeldetag: 14.10.2015
(51) Int. Cl.: A47B 9/04, A47B 9/20

(54) **VORRICHTUNG ZUM HÖHENVERSTELLEN EINES ERSTEN TEILS GEGENÜBER EINEM ZWEITEN TEIL, NACHRÜSTSATZ FÜR EINE DERARTIGE VORRICHTUNG SOWIE HÖHENVERSTELLBARES SYSTEM UMFASSEND MEHRERE DERARTIGE VORRICHTUNGEN**

(30) Priorität: 24.10.2014 DE 102014221699
(71) Anmelder: SUSPA GmbH, 90518 Altdorf (DE)
(72) Erfinder: Happich, Markus, 90537 Feucht-Moosbach (DE); Kengni, Joel Zifried, 90478 Nürnberg (DE); Schmitt, Sebastian, 90409 Nürnberg (DE)
(74) Vertreter: Rau, Schneck & Hübner Patentanwälte Rechtsanwälte PartGmbB

(57) **Zusammenfassung**

Eine Vorrichtung (2) zum Höhenverstellen eines ersten Teils gegenüber einem zweiten Teil umfasst ein erstes Hohlprofil-Element (3), ein zweites Hohlprofil-Element (4), das entlang seiner Längsachse (5) gegenüber dem ersten Hohlprofil-Element (3) verlagerbar ist, eine Antriebseinheit (11) zum Verlagern des zweites Hohlprofil-Elements (4) gegenüber dem ersten Hohlprofil-Element (3) und eine bezogen auf die Längsachse (5) zwischen dem ersten Hohlprofil-Element (3) und dem zweiten Hohlprofil-Element (4), angeordnete Abstützeinheit (28) zum Abstützen des ersten Hohlprofil-Elements (3) an dem zweiten Hohlprofil-Element (4).

## Beschreibung

Die vorliegende Patentanmeldung nimmt die Priorität der deutschen Patentanmeldung DE 10 2014 221 699.0 in Anspruch, deren Inhalt durch Bezugnahme hierin aufgenommen wird.

Die Erfindung betrifft eine Vorrichtung zum Höhenverstellen eines ersten Teils gegenüber einem zweiten Teil, einen Nachrüstsatz für eine derartige Vorrichtung sowie ein höhenverstellbares System umfassend mehrere derartige Vorrichtungen.

Höhenverstellsysteme mit Hydraulikzylindern, die von einer gemeinsamen Pumpe angesteuert werden, sind bekannt. Diese Höhenverstellsysteme sind geeignet, hohe Lasten mit großen Verfahrgeschwindigkeiten zu bewegen. Die Hydraulikzylinder wirken in einer Ausfahrrichtung aktiv. In einer entgegengesetzten Einfahrrichtung ist eine Gegenkraft zur Verlagerung erforderlich. Austretende Hydraulikflüssigkeit aus Schlauchleitungen und/oder den Hydraulikzylindern beispielsweise infolge einer Beschädigung des Systems, ist prinzipiell unerwünscht, kann zu Schäden und letztlich zu einem Ausfall des Systems führen und ist beispielsweise in hygienerelevanten Einsatzbereichen in der Gastronomie und in der Medizintechnik, nicht zulässig. Um die Dichtheit des Systems über die gesamte Lebensdauer und einen Einsatztemperaturbereich zu gewährleisten, sind große Aufwendungen, insbesondere während der Herstellung, erforderlich.

Die DE 10 2010 000 970 A1 offenbart eine Vorrichtung zur Tischhöhenverstellung mittels Elektromotor. Eine derartige Vorrichtung ist in der Anwendung begrenzt, da die verfahrbaren Lasten eingeschränkt sind und durch die relativ großen Baugrößen nur schwer in bestehende Systeme zu integrieren sind.

Der vorliegenden Erfindung liegt die Aufgabe zugrunde, eine Vorrichtung zum Höhenverstellen bereitzustellen, die hohe Lasten bewältigen kann und Hydraulikzylinder und die damit verbundenen Nachteile entbehrlich macht.

Die Aufgabe wird durch die Merkmale der Ansprüche 1, 13 und 14 gelöst. Der Kern der Erfindung besteht darin, dass eine Vorrichtung zum Höhenverstellen zwei relativ zueinander verlagerbare Hohlprofil-Elemente aufweist, wobei bezogen auf deren Längsachse eine zwischen den Hohlprofil-Elementen angeordnete Abstützeinheit vorgesehen ist. Die Abstützeinheit dient zum Abstützen des ersten Hohlprofil-Elements an dem zweiten Hohlprofil-Element. Das erste Hohlprofil-Element ist insbesondere innerhalb des zweiten, äußeren Hohlprofil-Elements angeordnet. Das erste innere Hohlprofil-Element stützt sich mit einer Außenseite an einer Innenseite der Abstützeinheit ab. Die Abstützeinheit ermöglicht die Aufnahme einer Radial- und/oder Querkraftbeanspruchung des ersten Hohlprofil-Elements. Insbesondere liegt das erste Hohlprofil-Element mit der Außenseite an der Innenseite der Abstützeinheit an. Die Abstützeinheit liegt insbesondere mit einer Außenseite an einer Innenseite des äußeren Hohlprofil-Elements an. Insbesondere ist zwischen dem jeweiligen Hohlprofil-Element und der Abstützeinheit ein Flächenkontakt vorgesehen. Die Relativverlagerung zwischen den Hohlprofil-Elementen ist stabilisiert und robust. Eine Antriebseinheit, die ein Verlagern der beiden Hohlprofil-Elemente relativ zueinander ermöglicht, macht einen Hydraulikzylinder entbehrlich. Es sind andere, insbesondere hydraulikunabhängige, Antriebskonzepte möglich. Die Nachteile eines hydraulischen Verstellsystems werden dadurch vermieden. Aufgrund der Abstützung mit der Abstützeinheit ermöglichen die alternativen Antriebskonzepte das Verlagern großer Lasten, die beispielsweise nur mittels eines hydraulischen Verstellsystems hätten verlagert werden können. Entlang der Längsachse kann beispielsweise eine Axialkraft mit der Vorrichtung bewältigt werden, die mindestens 1 kN, insbesondere mindestens 1,2 kN, insbesondere mindestens 1,4 kN und insbesondere 1,5 kN beträgt.

Eine Vorrichtung, bei der die Antriebseinheit einen Motor, insbesondere einen Elektromotor, umfasst, ermöglicht eine vorteilhafte Verlagerung der Hohlprofil-Elemente zueinander. Ein Elektromotor ist unkompliziert elektrisch ansteuerbar. Ein Elektromotor kann kleinbauend ausgeführt und insbesondere innerhalb eines Hohlprofil-Elements integriert sein. Eine Anbindung ist unkompliziert über elektrische Anschlussstecker und Kabel möglich. Die Drehzahl und das Drehmoment des Elektromotors können in weiten Grenzen vorkonfektioniert sein. Es existiert eine große Auswahl von Elektromotoren.

Eine Vorrichtung, bei der die Antriebseinheit ein Getriebe aufweist, ermöglicht eine Anpassung von Drehzahl und Drehmoment eines Motors für die Antriebseinheit. Ein Getriebe kann insbesondere das Drehmoment und somit die Ausschubkraft der Vorrichtung erhöhen.

Eine Vorrichtung, bei der die Antriebseinheit eine Gewindespindel und eine dazu korrespondierende Spindelmutter aufweist, ermöglicht eine robuste und exakte Verlagerung der Hohlprofil-Elemente zueinander. Insbesondere ist die Gewindespindel innerhalb des zweiten Hohlprofil-Elements angeordnet und mit dem zweiten Hohlprofil-Element fest verbunden, insbesondere bezüglich einer Verlagerung entlang der Längsachse. Eine Drehbewegung der Gewindespindel bewirkt eine Axialverlagening der Spindelmutter, insbesondere gegenüber dem zweiten Hohlprofil-Element.

Eine Vorrichtung mit einer Bremseinheit ermöglicht insbesondere ein unbeabsichtigtes Verlagern der Hohlprofil-Elemente zueinander, insbesondere ohne Betätigung der Antriebseinheit. Um auch höhere Verfahrgeschwindigkeiten mit der Antriebseinheit zu ermöglichen sowie dabei die Spindeldrehzahl aufgrund von Geräuschentwicklungen niedrig zu halten, kann ein Spindelantrieb vorgesehen sein, bei dem die Gewindespindel eine derart große Spindelsteigung aufweist, dass eine Selbsthemmung nicht gewährleistet ist. Zu verfahrende Lasten können mit der Vorrichtung verlagert, insbesondere gehoben, werden. In einem nicht betätigten Zustand der Antriebseinheit kann aber nicht zuverlässig gewährleistet werden, dass eine zuvor verfahrene Last in dem nicht betätigten Zustand gehalten werden kann. Aufgrund der Belastung der äußeren Last und der begrenzten bzw. nicht vorhandenen Selbsthemmung der Gewindespindel könnte eine unerwünschte Einschub-Verlagening erfolgen. Um dies zu verhindern, ist die Bremseinheit vorgesehen. Die Bremseinheit ist insbesondere drehrichtungsabhängig wirkend. Das bedeutet, dass in Abhängigkeit der Drehrichtung der Antriebseinheit, insbesondere der Gewindespindel, eine Bremswirkung entfaltet. Vorteilhaft ist es, wenn die Bremseinheit eine Bremswirkung bei einem Einfahren der Vorrichtung, also bei einer Einfahr-Drehbewegung, aufweist. In der entgegengesetzten Drehrichtung, also einer Ausfahr-Drehrichtung, soll keine oder eine deutlich geringere Bremswirkung entfaltet werden. Insbesondere ist die Bremseinheit also derart ausgeführt, dass eine Ausfahr-Verlagerung zum Heben einer Last, ohne oder eine deutlich geringere Bremswirkung, erfolgt. Eine Einfahrverlagerung, die insbesondere durch Betätigung der Antriebseinheit, insbesondere der Gewindespindel, entlang einer Einfahr-Drehrichtung resultiert, abgebremst wird. Die Bremseinheit kann insbesondere als Schlingfederbremse oder als Bremse mit Freilauf ausgeführt sein.

Eine Vorrichtung mit einer Verdrehsicherung zum Verhindern eines Verdrehens des zweiten Hohlprofil-Elements gegenüber dem ersten Hohlprofil-Element um die Längsachse gewährleistet eine zuverlässige Umwandlung einer Drehbewegung einer Kinematikeinheit, insbesondere der Gewindespindel, in eine axiale Verlagerung der Hohlprofil-Elemente entlang der Längsachse. Insbesondere ist die Gewindespindel entlang der Längsachse der Vorrichtung geführt verlagerbar.

Eine Vorrichtung, bei der die Verdrehsicherung ein entlang der Längsachse verlagerbares Element, insbesondere eine Spindelmutter mit einer senkrecht zur Längsachse unrunden Elementkontur aufweist, wobei das verlagerbare Element insbesondere mit einer Haltestruktur zusammenwirkt, die eine der Elementkontur korrespondierende Haltestrukturkontur aufweist, ist die Verdrehsicherung robust und unkompliziert ausgeführt. Vorteilhaft ist es, wenn das verlagerbare Element insbesondere die Spindelmutter der Antriebseinheit ist. Die Spindelmutter dient in der Kinematikeinheit zur Umsetzung der Antriebsdrehbewegung in eine Axialverlagening. Gleichzeitig dient die Spindelmutter zur geführten Axialverlagening und damit als Verdrehsicherung. Insbesondere ist die Elementkontur als Außenkontur an der Spindelmutter ausgeführt. Insbesondere ist die Haltestrukturkontur als Innenkontur ausgeführt und insbesondere ist die Haltestrukturkontur an dem äußeren Hohlprofil-Element integriert.

Eine Vorrichtung, bei der die Elementkontur bezogen auf die Längsachse mindestens einen, insbesondere mindestens zwei, insbesondere mindestens drei und insbesondere genau drei, radial vorstehende Führungsstege aufweist und die Haltestrukturkontur jeweils eine zu dem mindestens einen Fühningssteg korrespondiere Führungsnut aufweist, ermöglicht eine kompakte Ausführung der Verdrehsicherung.

Eine Vorrichtung, bei der die Abstützeinheit eine Führungsbuchse aufweist, die insbesondere stirnseitig an dem zweiten Hohlprofil-Element befestigt ist, ermöglicht eine unkomplizierte und robust ausgeführte Abstützung, insbesondere des ersten Hohlprofil-Elements.

Eine Vorrichtung, bei der die Abstützeinheit als Axialanschlagelement für die Verlagerung des ersten Hohlprofil-Elements gegenüber dem zweiten Hohlprofil-Element dient, gewährleistet eine definierte Verlagerung der Hohlprofil-Elemente zueinander. Insbesondere ist ein separates Anschlagelement, das eine maximale Ausfahrbewegung der Vorrichtung begrenzt, nicht erforderlich. Die Abstützeinheit ist funktionsintegriert ausgeführt.

Eine Vorrichtung mit einer Encodereinheit zum, insbesondere elektrischen, Kontaktieren der Antriebseinheit, vereinfacht die Zugänglichkeit und Steuerung der Antriebseinheit. Die Encodereinheit vereinfacht insbesondere die Versorgung der Antriebseinheit mit elektrischem Strom und darüber hinaus insbesondere die Erfassung von Drehrichtung und Anzahl von Umdrehungen der Antriebseinheit.

Eine Vorrichtung mit einer Lageningseinheit zum Aufnehmen von bezogen auf die Längsachse radial und/oder axial gerichteten Kräften, die insbesondere durch die Antriebseinheit eingeleitet worden sind, ermöglichen eine stabile und robuste Ausführung der Vorrichtung. Die Vorrichtung ist geeignet, radial und/oder axial gerichtete Kräfte von außen aufzunehmen. Derartige Kräfte von außen beinträchtigen die Funktion der Vorrichtung nicht.

Ein Nachrüstsatz für eine erfindungsgemäße Vorrichtung ermöglicht es, eine erfindungsgemäße Vorrichtung an einem bereits existierenden Höhenverstellsystem nachzurüsten. Ein Nachrüstsatz umfasst eine in dem ersten und/oder zweiten Hohlprofil-Element anordenbare Antriebseinheit zum Verlagern des zweiten Hohlprofil-Elements gegenüber dem ersten Hohlprofil-Element. Der Nachrüstsatz umfasst ferner eine bezogen auf die Längsachse zwischen dem ersten Hohlprofil-Element und dem zweiten Hohlprofil-Element anordenbare Abstützeinheit. Der Nachrüstsatz erlaubt es insbesondere, bereits existierende Höhenverstellsysteme, die hydraulikzylindergebunden sind, durch alternative Antriebseinheiten, insbesondere elektromotorisch betriebene Antriebseinheiten, zu ersetzen. Dadurch, dass der Nachrüstsatz der Vorrichtung eine Abstützeinheit aufweist, ist eine stabilisierte Verlagerung der Hohlprofil-Elemente zueinander möglich. Es ist deshalb gewährleistet, dass der zur Verfügung stehende Bauraum innerhalb der Hohlprofil-Elemente eines ursprünglich hydraulikzylindergebundenen Höhenverstellsystems ausreichend sind, um darin einen entsprechenden Nachrüstsatz, insbesondere die Antriebseinheit und die Abstützeinheit, unterzubringen. Insbesondere ermöglicht der Nachrüstsatz es, Hohlprofil-Elemente zu verwenden, die baulich identisch sind zu den Hohlprofil-Elementen von bereits existierenden höhenverstellbaren Systemen. Beim Nachrüsten eines höhenverstellbaren Systems ist es insbesondere ausreichend, die hydraulikbasierten Vorrichtungen durch erfindungsgemäße Vorrichtungen zu tauschen. Ein bereits existierendes statisches System, das nicht höhenverstellbar ist, kann mit dem Nachrüstsatz ausgerüstet werden, um ein höhenverstellbares System zu schaffen. Der Nachrüstsatz ermöglicht eine funktionelle Aufwertung von Funktionsmöbeln.

Ein höhenverstellbares System mit mindestens einem ersten Teil, insbesondere einem Fußgleiter, mit mindestens einem gegenüber dem ersten Teil höhenverstellbaren zweiten Teil und mit mindestens einer erfindungsgemäßen Vorrichtung weist im Wesentlichen die Vorteile der erfindungsgemäßen Vorrichtung selbst auf, worauf hiermit verwiesen wird. Das höhenverstellbare System umfasst insbesondere mindestens drei und insbesondere genau vier Vorrichtungen, wobei jeweils das erste, innere Hohlprofil-Element der Vorrichtung mit jeweils einem ersten Teil verbunden ist. Jeweils das zweite, innere Hohlprofil-Element einer Vorrichtung ist mit dem zweiten Teil, insbesondere einem Teil einer Grundstruktur eines Tisches oder einer anderen fußenden Hebeanwendung, verbunden. Ein Teil einer Grundstruktur des Tisches oder einer anderen Hebeanwendung ist insbesondere ein Tischbein. Die Tischbeine können miteinander über Aussteifungselemente und/oder über eine gemeinsame Tischplatte verbunden sein. Die Grundstruktur bildet insbesondere die Unterkonstruktion einer Tischplatte oder Vorrichtungsauflage. Mittels der Vorrichtungen können die Fußgleiter relativ zu der Grundstruktur des Tisches oder der Hebeanwendung verlagert werden. Ein Tisch oder eine andere Hebeanwendung, der über die Grundstruktur, die damit verbundenen Vorrichtungen und den daran angebrachten Fußgleitern am Boden abgestützt ist, kann durch Betätigung der Vorrichtungen höhenverstellt werden. Eine Betätigung der Vorrichtungen bewirkt also ein Anheben der Grundstruktur des Tisches oder der Hebeanwendung mit der darauf angebrachten Tischplatte oder Vorrichtungsauflage.

Ein höhenverstellbares System mit einer Steuerungseinheit zum Steuern der Antriebseinheiten ermöglicht eine lineare Höhenverstellung des Systems. Insbesondere dient die Steuerungseinheit zum Synchronisieren der Antriebseinheiten. Eine Synchronisation ist insbesondere dann erforderlich, wenn insbesondere infolge einer äußeren Belastung, die einzelnen Antriebseinheiten ungleichmäßig belastet werden. Es ist gewährleistet, dass trotz ungleichmäßiger Belastung der Antriebseinheiten sämtliche Antriebseinheiten gleichmäßig, also mit gleicher Verlageningsgeschwindigkeit, ausgefahren werden.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine perspektivische Darstellung eines höhenverstellbaren Systems gemäß der Erfindung,
- Fig. 2: eine vergrößerte Darstellung einer Vorrichtung zum Höhenverstellen in einer eingefahrenen Anordnung,
- Fig. 3: eine Fig. 2 entsprechende Darstellung der Vorrichtung in einer ausgefahrenen Anordnung,
- Fig. 4: eine vergrößerte Detailansicht einer Schnittdarstellung gemäß Detail IV in Fig. 2,
- Fig. 5: eine vergrößerte Detailansicht einer Schnittdarstellung gemäß Detail V in Fig. 2,
- Fig. 6: eine Fig. 5 entsprechende Darstellung des Details VI in Fig. 3,
- Fig. 7: eine Schnittdarstellung gemäß Schnittlinie VII-VII in Fig. 5,
- Fig. 8: eine vergrößerte Detailansicht des Details VIII in Fig. 5 zur Darstellung einer Bremseinheit gemäß einem ersten Ausführungsbeispiel, und
- Fig. 9: eine Fig. 8 entsprechende Darstellung einer Bremseinheit gemäß einem zweiten Ausführungsbeispiel.

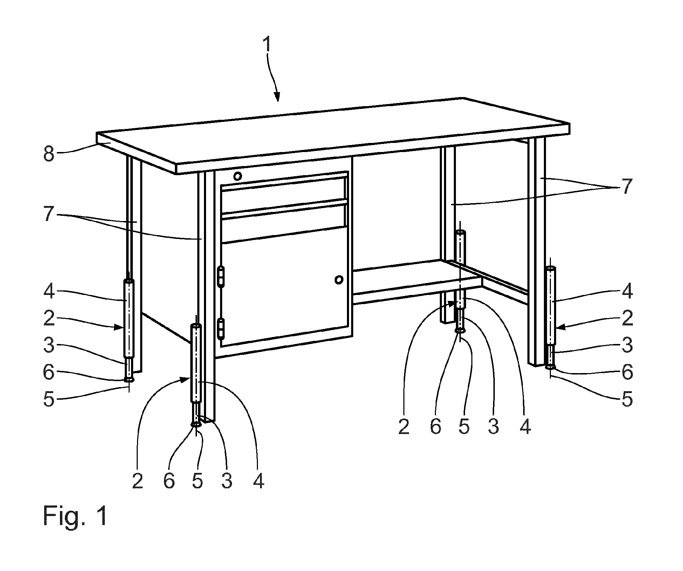

Ein in Fig. 1 dargestelltes höhenverstellbares System 1 ist in Form einer höhenverstellbaren Werkbank ausgeführt. Das System 1 ist ein höhenverstellbarer Tisch, der grundsätzlich in verschiedenen Anwendungsbereichen einsetzbar ist. In einem industriellen Umfeld sind höhenverstellbare Systeme gemäß der Erfindung in Form von höhenverstellbaren Fließbändern, Montagebändern, Montageanlagen und/oder Maschinen denkbar. In der Möbelbranche sind für Küchenanwendungen höhenverstellbare Kücheninseln, Spülbecken, Arbeitsflächen und sonstige Kücheneinrichtungen denkbar. Ein Büroarbeitsplatz kann beispielsweise ein höhenverstellbarer Einzelarbeitsplatz sein. Es sind auch höhenverstellbare Gruppenarbeitsplätze, insbesondere in Form von Bürotischen, Zeichenbrettern, CAD-Arbeitsplätzen, Näh- und Packtischen und Spültischen in der Gastronomie denkbar. Es sind gewerblich genutzte Möbel bekannt wie beispielsweise höhenverstellbare Verkaufs- und/oder Service-Einrichtungen im Groß- und Einzelhandel, insbesondere Wühltische, höhenverstellbare Vitrinen in Museen und Ausstellungsräumen und insbesondere Kassenstationen, Verkaufstheken, Check-In-Schalter. Im Bereich der Medizin- und Rehabilitationstechnik werden höhenverstellbare Krankenliegen eingesetzt, um ein komfortables und sicheres Heben und Senken zu ermöglichen. Es existieren höhenverstellbare Behandlungstische, Operationsliegen und Massageliegen. Ein höhenverstellbares System im Sinne der Erfindung kann auch eine Ein- und/oder Ausstiegshilfe, insbesondere in eine Badewanne, sein. Es sind auch höhenverstellbare Inkubatoren und/oder Autopsietische denkbar.

Das höhenverstellbare System 1 umfasst vier Vorrichtungen 2 zum Höhenverstellen. Die Vorrichtungen 2 weisen jeweils ein erstes, inneres Hohlprofil-Element 3 und ein zweites, äußeres Hohlprofil-Element 4 auf, das entlang seiner Längsachse 5 gegenüber dem ersten Hohlprofil-Element 3 verlagerbar ist. Jeweils das erste, innere Hohlprofil-Element 3 ist mit einem Gleitfuß 6 verbunden, der auf dem Boden abgestützt ist. Mit den Gleitfüßen 6 ist das System 1 auf dem Boden abgestellt. An einer Unterseite, mit der die Gleitfüße 6 auf dem Boden abgestellt sind, ist insbesondere eine mechanisch strapazierfähige und rutschfähige Gleitschicht an den Gleitfüßen 6 vorgesehen. Dadurch ist ein Verrutschen des Systems 1 gegenüber dem Boden vereinfacht. Eine Beschädigung der Gleitschicht und insbesondere der Gleitfüße 6 selbst ist verhindert. Der Gleitfuß 6 ist mittels eines Anbindungselements 30 in das innere Hohlprofil-Element 3 eingepasst.

Das jeweils zweite, äußere Hohlprofil-Element 4 ist mit jeweils einem Tischbein 7 der Werkbank verbunden. Die Tischbeine 7 sind im Wesentlichen in Eckbereichen an einer Unterseite einer rechteckförmigen Tischplatte 8 befestigt. Die Tischbeine 7 bilden eine Grundkonstruktion des Systems 1. Die Grundkonstruktion, die insbesondere mit der Tischplatte 8 verbunden ist, umfasst weitere Aussteifungselemente wie beispielsweise Zwischenstreben, Zwischenböden und/oder Unterschränke. Die Tischbeine 7 sind jeweils zweite Teile im Sinne der Erfindung. Die zweiten Teile sind gemäß dem gezeigten Ausführungsbeispiel zu der Grundkonstruktion zusammengefasst. Eine Verlagerung eines zweiten Teils, also eines Tischbeins 7, bewirkt gleichzeitig eine Verlagerung der anderen Tischbeine 7 und der daran befestigten Vorrichtungen 2.

Es ist auch möglich, dass das innere Hohlprofil-Element als zweites Hohlprofil-Element dient und mit einem Gleitfuß verbunden ist. In diesem Fall wäre das äußere Hohlprofil-Element ein erstes Hohlprofil-Element, das mit der Grundstruktur des Systems 1, insbesondere mit den jeweiligen Tischbeinen 7 eines Tisches verbunden wäre.

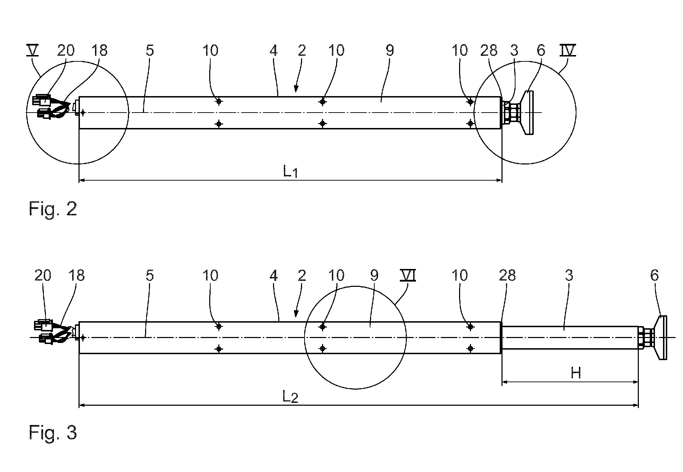

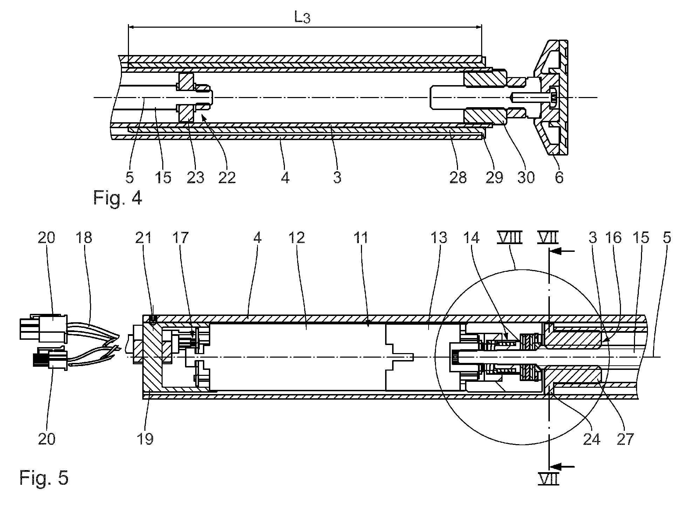

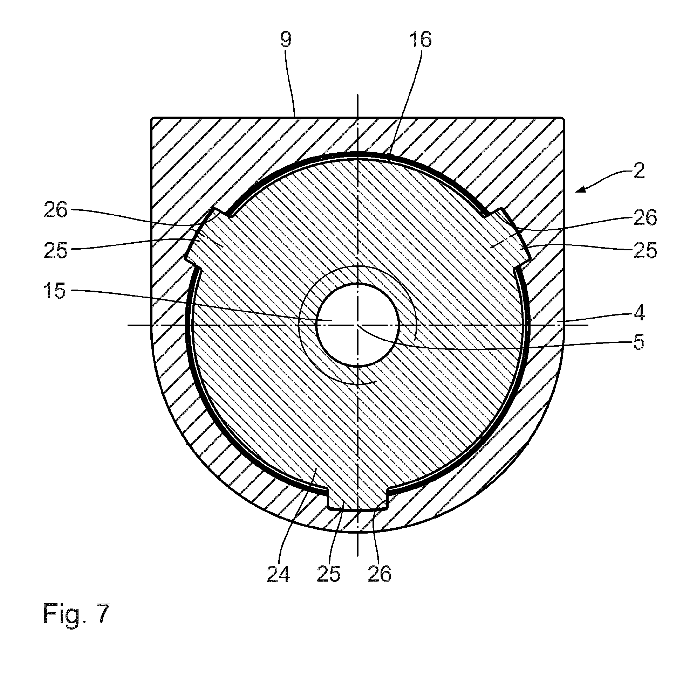

Nachfolgend wird anhand der Fig. 2 bis 8 die Vorrichtung 2 gemäß einem ersten Ausführungsbeispiel näher erläutert.

Fig. 2 zeigt eine Vorrichtung 2 gemäß Fig. 1 in einem maximal eingefahrenen Zustand. In diesem Zustand weist die Vorrichtung 2 eine Länge L₁ auf. Ein maximal ausgefahrener Zustand der Vorrichtung 2 ist in Fig. 3 gezeigt. In diesem Zustand hat die Vorrichtung 2 eine Länge L₂, die größer ist als die Länge L₁. Die Längendifferenz ergibt den maximalen Hub H, der in Fig. 2 dargestellt ist.

Gemäß dem gezeigten Ausführungsbeispiel weist das äußere Hohlprofil-Element 4 eine ebene Anlagefläche 9 auf. Die Anlagefläche 9 weist mehrere Befestigungsbohrungen 10 auf. Die Befestigungsbohrungen 10 dienen zum Befestigen der Vorrichtung 2 an der Grundstruktur des Systems 1, insbesondere an dem Tischbein 7.

Gemäß dem gezeigten Ausführungsbeispiel ist das äußere Hohlprofil-Element 4 als sogenanntes CB-Profil ausgeführt. Das CB-Profil ermöglicht eine schnelle und unkomplizierte Montage durch Anbolzen oder Anschrauben an bestehende Möbelelemente, insbesondere an eine Werkbank. Es sind auch alternative Formgebungen für das äußere Hohlprofil-Element 4 denkbar. Mit einem sogenannten Corner-Leg-Profil ist ein modulartiger Aufbau eines Systems möglich, in dem einzelne Profilelemente miteinander verbindbar sind. Ein derartiges Profilelement ist insbesondere aus Aluminiumstranggus hergestellt. Ein derartiges Profilelement ermöglicht eine große Flexibilität bei der Festlegung der Geometrie des Möbelelements.

Das äußere Hohlprofil-Element 4 ist ein Gehäuse der Vorrichtung 2. Wesentlich ist, dass das äußere Hohlprofil-Element 4, insbesondere unabhängig von der Außenkontur, eine im Wesentlichen zylinderförmige Innenkontur aufweist.

In dem äußeren Hohlprofil-Element 4 ist ein inneres Hohlprofil-Element 3 entlang der Längsachse 5 verlagerbar.

Für die Verlagerung des zweiten Hohlprofil-Elements 4 gegenüber dem ersten Hohlprofil-Element 3 ist eine Antriebseinheit 11 vorgesehen, die im Folgenden näher erläutert wird. Die Antriebseinheit 11 ist gemäß dem gezeigten Ausführungsbeispiel anteilig in dem ersten Hohlprofil-Element 3 und in dem zweiten Hohlprofil-Element 4 angeordnet. Die Antriebseinheit 11 ist von außerhalb der Vorrichtung 2, wie beispielsweise in Fig. 2, 3, nicht sichtbar.

Die Antriebseinheit 11 umfasst einen Motor, der gemäß dem gezeigten Ausführungsbeispiel als Elektromotor 12 ausgeführt ist. Einem stirnseitigen Ende des äußeren Hohlprofil-Elements zugewandt ist an dem Elektromotor 12 eine Encodereinheit 17 vorgesehen. Die Encodereinheit 17 kann beispielsweise zwei Hall-Sensoren aufweisen, die bezüglich der Längsachse 5 einen Versatz, beispielsweise 90°, zueinander aufweisen und mit einem auf der Motorwelle des Elektromotors 12 fest angeordneten Dauermagneten, der zweipolig oder noch mehrpolig ist, zusammenwirken. Bei jeder Motonumdrehung um die Längsachse 5 wird beispielsweise mit einem zweipoligen Dauermagneten für jeden Hall-Sensor ein Impuls ermittelt, der dann von einer nicht dargestellten Steuerungseinheit weiterverarbeitet wird. Die Impulse werden von der elektrischen Steueningseinheit insbesondere für eine synchrone Ansteuerung mehrer Vorrichtungen 2 verwendet. Insbesondere ist es damit möglich, einzelne Vorrichtungen 2 individuell anzusteuern und eine unsynchrone Verlagerung nachzujustieren, um insbesondere ein integral gleichmäßig lineare Verlagerung des zweiten Teils gegenüber dem ersten Teilen zu gewährleisten. Das Synchronisieren der Verlagerungen der Vorrichtungen 2 ist insbesondere bei unterschiedlichen äußeren Belastungen an den einzelnen Vorrichtungen 2 vorteilhaft. Die Encodereinheit 17 dient zum Kontaktieren von elektrischen Leitungen 18 an den Motor 12. Die elektrischen Leitungen 18 sind durch eine stirnseitig an dem äußeren Hohlprofil-Element 4 angeordneten Verschlusskappe 19 hindurchgeführt und jeweils mit einem Steckerelement 20 versehen. Mittels der Abdeckkappe 19 ist das äußere Hohlprofil-Element 4 zuverlässig, aber zugänglich, abgeschlossen. Die Abdeckkappe 19 ist gemäß dem gezeigten Ausführungsbeispiel mittels einer Madenschraube 21 fixiert.

Der Elektromotor 12 ist über ein Getriebe 13 und einer Bremseinheit 14 mit einer Gewindespindel 15 verbunden, die mit einer korrespondieren Spindelmutter 16 zusammenwirkt. Die Gewindespindel 15 ist in axialer Richtung bezogen auf die Längsachse 5 fest mit dem Getriebe 13 verbunden. Die Gewindespindel 15 ist bezogen auf Drehung um die Längsachse 5 drehfeste mit dem Getriebe verbunden. Eine Drehbewegung des Elektromotors 12 wird auf das Getriebe 13 und von dort unmittelbar auf die Gewindespindel 15 übertragen. Eine Drehbewegung der Gewindespindel 15 bewirkt eine Axialverlagening entlang der Längsachse 5 der Spindelmutter 16. Dazu weist die Spindelmutter 16 ein Innengewinde auf, das mit einem Spindelaußengewinde der Gewindespindel 15 korrespondiert. An einem freien Ende 22 ist die Gewindespindel 15 mittels eines Abstützelements 23 an dem inneren Hohlprofil-Element 3 abgestützt. Das Abstützelement 23 ist eine Spindelführung.

Die Spindelmutter 16 ist im Wesentlichen hülsenförmig ausgeführt. Die Spindelmutter 16 weist einen Tellerabschnitt 24 auf. Der Tellerabschnitt 24 ist stirnseitig an der Gewindespindel 15 angeordnet. Der Tellerabschnitt 24 ist einstückig an dem Hülsenabschnitt der Spindelmutter 16 angeformt. Der Tellerabschnitt 24 steht bezogen auf die Längsachse 5 gegenüber dem Hülsenabschnitt zumindest abschnittsweise radial vor. Gemäß dem gezeigten Ausführungsbeispiel sind entlang des äußeren Umfangs des Tellerabschnitts 24 der Gewindespindel 15 drei Führungsstege 25 vorgesehen. Bezogen auf die Umfangsrichtung um die Längsachse 5 sind die Führungsstege 25 gleich beabstandet zueinander, also jeweils mit 120°-Abstand zueinander angeordnet. Durch die Führungsstege 25 weist die Spindelmutter 16 eine senkrecht zur Längsachse 5 unrunde Elementkontur in Form einer unrunden Außenkontur auf. Die Führungsstege 25 sind jeweils in einer dort korrespondierenden Führungsnut 26 aufgenommen und ermöglichen eine geführte Verlagerung der Spindelmutter 16 entlang der Längsachse 5. Die an einer Innenseite einer Zylindermantelfläche des äußeren Hohlprofil-Elements 4 angebrachten Führungsnuten 26 bilden eine Haltestruktur, die mit der Spindelmutter 16 derart zusammenwirkt, dass eine Verdrehung der Spindelmutter 16 um die Längsachse 5 ausgeschlossen ist. Die Spindelmutter 16 bildet zusammen mit der Haltestruktur eine Verdrehsicherung, die ein Verdrehen der beiden Hohlprofil-Elemente 3, 4 zueinander verhindert.

Die Spindelmutter 16 ist an dem inneren Hohlprofil-Element 3 befestigt. Gemäß dem gezeigten Ausführungsbeispiel weist die Spindelmutter 16 im Bereicht des Hülsenabschnitts 27 ein Außengewinde auf, auf das das innere Hohlprofil-Element 3 aufgeschraubt ist und mittels einer Verklebung oder einer mechanischen Verstiftung gegen ein sich wieder Aufdrehen gesichert ist. Der Tellerabschnitt 24 dient zumindest im Bereich der Führungsstege 25 als Anschlagschulter für die ringförmige Stirnseitenfläche des inneren Hohlprofil-Elements 3. Durch die feste Verbindung der Spindelmutter 16 mit dem inneren Hohlprofil-Element 3, bewirkt eine Verlagerung der Spindelmutter 16 automatisch eine Verlagerung des inneren Hohlprofil-Elements 3. An einem der Spindelmutter 16 gegenüberliegenden stirnseitigen Ende ist an dem inneren Hohlprofil-Element 3 der Gleitfuß 6 befestigt, insbesondere eingeschraubt und gegen ein wieder Aufdrehen gesichert.

Bei der Vorrichtung 2 ist die Verdrehsicherung durch die Führungsnuten 26 am Innendurchmesser des äußeren Hohlprofil-Elements 4 und durch damit korrespondierenden Führungsstege 25 der Spindelmutter 16 ausgeführt. Die Spindelmutter 16 ist fest mit dem inneren Hohlprofil-Element 3 verbunden. Die Führungsnuten 26 erstrecken sich entlang der Längsachse 5 über die gesamte Länge des äußeren Hohlprofil-Elements 4. Damit ist eine zuverlässige und genaue geführte Verlagerung entlang der gesamten Länge des äußeren Hohlprofil-Elements 4 gewährleistet. Zusätzliche Führungselemente sind entbehrlich, wie die beispielsweise aus der DE 10 2010 000 970 A1 bekannt sind. Die Führungsnuten 26 und die Führungsstege 25 sind im Inneren der Vorrichtung 2 angeordnet. Die Verdrehsicherung ist im Inneren der Vorrichtung 2 geschützt. Insbesondere ist die Verdrehsicherung außerhalb eines Sichtbereichs angeordnet. Eine negative Beeinträchtigung des ästhetischen Gesamteindrucks ist dadurch verhindert. Zudem sind die Führungsstege 25 und die Führungsnuten 26 vor einer unerwünschten Verschmutzung geschützt. Die Verdrehsicherung ist langlebig ausgeführt.

Bezogen auf die Längsachse 5 ist in radialer Richtung zwischen dem ersten, inneren Hohlprofil-Element 3 und dem zweiten, äußeren Hohlprofil-Element 4 eine Abstützeinheit 28 in Form einer Führungsbuchse angeordnet. Die Führungsbuchse ist stirnseitig in das äußere Hohlprofil-Element 4 an dem der Abdeckkappe 19 gegenüberliegenden Ende eingeschoben. Eine maximale Einschubtiefe der Führungsbuchse ist durch einen Ringanschlag 29 festgelegt. Die Führungsbuchse weist entlang der Längsachse 5 eine Abstützeinheitslänge L₃ auf, mit der Abstützeinheit 28 in das äußere Hohlprofil-Element 4 hineinragt. Für die Dimensionierung der Abstützlänge L₃ gilt: L₃ ≈ 0,3 · H. H ergibt sich aus der Längendifferenz von L₂ und L₁..

Die Abstützeinheit 28 sorgt zusammen mit dem Abstützelement 23 für eine stabile Führung und ermöglicht so die Aufnahme von Quer- und/oder Radialkräften, die insbesondere auf das innere Hohlprofil-Element 3 wirken. Diese Quer- und/oder Radialkräfte werden von außen insbesondere bei der nicht exakt fluchtenden Montage der Vorrichtung 2 an das Tischbein 7 und aufgrund Fertigung- und Bauteiltoleranzversätze auf das Hohlprofil-Element 3 eingeleitet. Das innere Hohlprofil-Element 3 ist ein Führungsrohr.

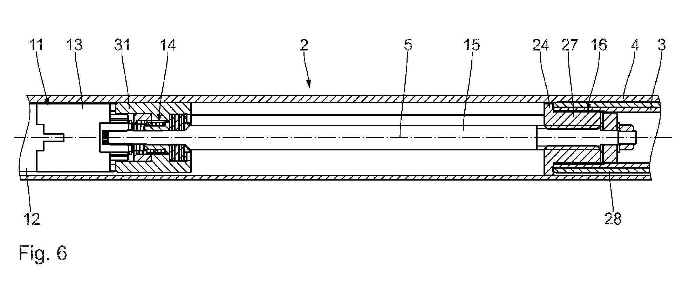

Die Vorrichtung 2 weist eine Lagerungseinheit 31 auf. Die Lagerungseinheit 31 ist unmittelbar mit dem äußeren Hohlprofil-Element 4 verbunden. Die Lageningseinheit 31 weist eine Axial-/Radiallagerung 32 für die Gewindespindel 15 auf. Die Axial-/Radiallagerung 32 ist in der Lagerungseinheit 31 mittels einer Lageningssicherung 33 axial entlang der Längsachse 5 gehalten, also axial fixiert. Auftretende Spindelaxialkräfte werden über die Axial-/Radiallagerung 32 direkt am äußeren Hohlprofil-Element 4 abgestützt. Am gegenüberliegenden Ende der Gewindespindel 15 ist das Abstützelement 23 zum Abstützen der Gewindespindel 15 am inneren Hohlprofil-Element 3 vorgesehen. Das Abstützelement 23 dient gleichzeitig als axiales Anschlagelement und somit als Begrenzung des Hubes in Ausfahrrichtung für das innere Hohlprofil-Element 3. Diese Anordnung ist in Fig. 6 dargestellt.

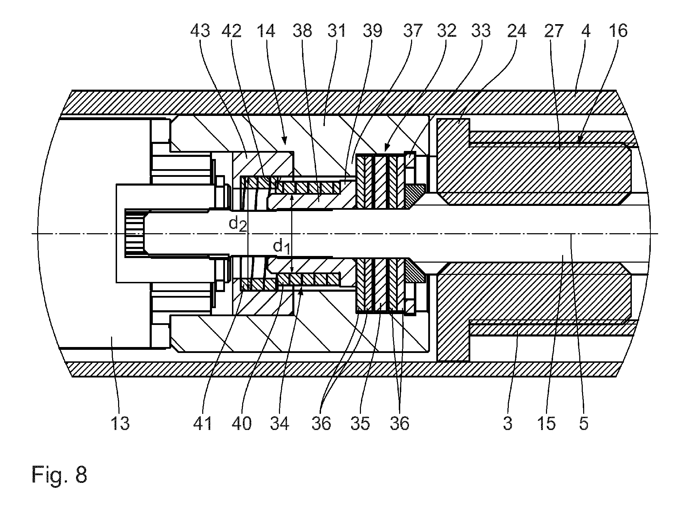

Die Axial-/Radiallagerung umfasst einen Axiallagerkranz 35 und entlang der Längsachse 5 beidseitig an dem Axiallagerkranz 35 jeweils angeordnete Lagerscheiben 36. Die in Fig. 8 links dargestellten Lagerscheiben 36 stützen sich stirnseitig an einer Schulter 37 der Lagerungseinheit 31 ab. Axiale Zugkräfte, die gemäß Fig. 8 nach rechts, also in Richtung der Spindelmutter 16 wirken, werden von der Gewindespindel 15 auf die daran fest angebundene Presshülse 38 eingeleitet. Die Presshülse 38 weist einen Ringbund 39 auf, über den die genannten axialen Zugkräfte auf die Axial-/Radiallagerung übertragen werden. Die Lagerscheiben 36 stützen die eingeleiteten Kräfte über die Lagersicherung 33 an der Lagerungseinheit 31 ab.

Nachfolgend wird anhand der Fig. 8 eine erste Ausführungsform der Bremseinheit 14 näher erläutert. Die erste Bremseinheit 14 umfasst eine Schlingfeder 34.

Wie vorstehend bereits erläutert, ist die Bremseinheit 14 drehrichtungsabhängig wirkend.

Die Bremseinheit 14 mit der Schlingfeder 34 dient dazu, um ein zusätzliches Reibmoment bei einer Drehbewegung der Gewindespindel 15 um die Längsachse 5 zu erzeugen. Die Schlingfeder 34 ist ein Federelement, bei dem der Federdraht bezogen auf eine Drehachse der Schlingfeder 34 zylindrisch gewickelt ist. Gemäß dem gezeigten Ausführungsbeispiel weist der Federdraht einen rechteckförmigen, insbesondere einen quadratischen Querschnitt auf. Die Schlingfeder 34 ist mit der Drehachse konzentrisch zur Längsachse 5 der Vorrichtung 2 angeordnet. Die Schlingfeder 34 ist in der Lageningseinheit 31 aufgenommen.

Die Schlingfeder 34 weist einen ersten Zylinderabschnitt 40 auf, der der Presshülse 38 zugewandt ist. Der erste Zylinderabschnitt 40 weist einen ersten Innendurchmesser d₁ auf. Der erste Innendurchmesser d₁ ist derart gewählt, dass die Schlingfeder 34 mit dem ersten Zylinderabschnitt 40 in Reibverbindung mit der Presshülse 38 steht. Die Schlingfeder 34 liegt mit dem ersten Zylinderabschnitt 40 mit deren zylindermantelflächenförmigen Innenfläche an einer zylinderförmigen Außenfläche der Presshülse 38 an. Die Schlingfeder 34 ist mit dem ersten Zylinderabschnitt 40 an der Presshülse 38 befestigt. Die Schlingfeder 34 ist in drehmomentübertragenderweise mit der Gewindespindel 15 verbunden.

An einem dem ersten Zylinderabschnitt 40 gegenüberliegenden Ende der Schlingfeder 34 ist ein zweiter Zylinderabschnitt 41 angeordnet. Der zweite Zylinderabschnitt 41 weist einen zweiten Durchmesser d₂ auf, der größer ist als der erste Innendurchmesser d₁. Entsprechend ist ein korrespondierender Außendurchmesser des zweiten Zylinderabschnitts 41 größer als ein erster Außendurchmesser des ersten Zylinderabschnitts 40. Mit seiner Zylinderaußenfläche ist der zweite Zylinderabschnitt 41 der Schlingfeder 34 an einer Innenfläche 42 einer Reibhülse 43 in Eingriff gebracht. Die Reibhülse 43 ist durch eine Presspassung in der Lageningseinheit 31 fest angeordnet.

In Abhängigkeit der Durchmesserverhältnisse, also insbesondere des Verhältnisses des ersten Innendurchmessers d₁ des ersten Zylinderabschnitts 40 zu dem Außendurchmesser d₂ der Presshülse 38 und/oder dem Verhältnis des Außendurchmessers des zweiten Zylinderabschnitts 41 und einem Innendurchmesser der Reibhülse 43 können die lokalen, insbesondere radial wirkenden, Vorspannungen der Schlingfeder 34 in der Lageningseinheit 31 beeinflusst werden. In Abhängigkeit einer Federvorspannung können gezielt unterschiedlich wirkende Reibmomente, also Bremswirkungen, verursacht werden. Die Reibmomente sind zudem auch von den gewählten Materialpaarungen, also insbesondere der Festlegung der Materialien für die Presshülse 38, die Reibhülse 43 und die Schlingfeder 34 abhängig. In Abhängigkeit der Drehrichtung der Gewindespindel 15 um die Längsachse 5 wirkt ein Reibmoment entweder zwischen dem ersten Zylinderabschnitt 40 und der Presshülse 38 oder zwischen dem zweiten Zylinderabschnitt 41 und der Reibhülse 43. Damit ist es möglich, unterschiedliche Reibmomente in Abhängigkeit der Drehrichtung der Gewindespindel 15 einzustellen.

Die Schlingfeder 34 ist einteilig ausgeführt. Die Zylinderabschnitte 40, 41 sind einstückig miteinander verbunden. Die Schlingfeder 34 ist zusammenhängend aus einem Wickeldraht gefertigt. Die Schlingfeder 34 ist in dem ersten Zylinderabschnitt 40 mit einem ersten Durchmesser gewickelt, der kleiner ist als ein zweiter Durchmesser in dem zweiten Zylinderabschnitt 41.

Nachfolgend wird die Funktion einer erfindungsgemäßen Vorrichtung 2 näher erläutert. Zum Höhenverstellen des Systems 1 werden die vier Vorrichtungen 2 aktiviert. Dazu dient ein nicht näher dargestellter Schalter, der beispielsweise an einer Unterseite der Tischplatte 8 angeordnet sein kann.

Über den Schalter wird die nicht näher dargestellte Steuerungseinheit angesteuert, die über die Stecker 20 und die elektrischen Kabel 18 mit der Vorrichtung 2 verbunden ist. Die Steuerungseinheit verursacht eine Drehbewegung des Elektromotors 12. Diese Drehbewegung wird über das Getriebe 13 unmittelbar auf die Gewindespindel 15 übertragen. Die Drehbewegung der Gewindespindel 15 bewirkt eine Axialverlagerung der Spindelmutter 16 entlang der Längsachse 5. Mit der Spindelmutter 16 wird das innere Hohlprofil-Element 3 entlang der Längsachse 5 verlagert. Aufgrund der Verdrehsicherung ist gewährleistet, dass ein unerwünschtes Verdrehen der Hohlprofil-Elemente 3, 4 verhindert ist. Das äußere Hohlprofil-Element 4 ist fest an dem jeweiligen Tischbein 7 befestigt.

Infolge der Ausfahrbewegung der Vorrichtung 2 hält sich die Schlingfeder 34 infolge einer größeren pressenden Passung mit dem zweiten Zylinderabschnitt 41 an der Reibhülse 43 fest. Ferner reibt sich dann die Schlingfeder 34 mit dem ersten Zylinderabschnitt 40 infolge einer geringeren pressenden Passung an der Presshülse 38 ab . Diese Ausfahrbewegung der Vorrichtung 2 wird von der Drehrichtung der Gewindespindel 15 verursacht. Die Drehrichtung der Gewindespindel 15 ist von der Orientierung des Spindelgewindes abhängig, also davon, ob ein Links- oder ein Rechtsgewinde an der Gewindespindel 15 vorgesehen ist. Wesentlich ist, dass die Wickelrichtung der Schlingfeder 34 der Drehrichtung der Gewindespindel 15 in Ausfahrbewegung entgegengesetzt ist. Entsprechend der Wickelrichtung des Federdrahts der Schlingfeder 34 ist festgelegt, dass sich der erste Zylinderabschnitt 40 bei der Ausfahrdrehbewegung an der Presshülse durchreibt und der zweite Zylinderabschnitt 41 sich an der Reibhülse 43 infolge der größeren pressenden Passung festhält.

Infolge der Einfahrbewegung der Vorrichtung 2 dreht sich dann die Gewindespindel 15 in der Schlingfederwickelrichtung, sodass sich die Schlingfeder 34 am ersten Zylinderabschnitt 40 an der Presshülse 38 festschlingt und sich somit die Schlingfeder 34 mit der Gewindespindel 15 mit dreht. Ferner reibt sich dann die Schlingfeder 34 mit dem zweiten Zylinderabschnitt 41 nach Überwindung eines höheren Reibmoments an der Reibhülse 43 ab. Festschlingen bedeutet, dass infolge der Drehmomentbeanspruchung der Schlingfeder 34 sich deren Durchmesser, also insbesondere der Innendurchmesser und der Außendurchmesser des jeweiligen Zylinderabschnitts 40, 41, aufweitet bzw. verringert und sich damit die Schlingfeder 34 am jeweiligen Gegenstück festschlingt. Entsprechend bedeutet Durchreiben, dass sich der jeweilige Innen- und Außendurchmesser der Zylinderabschnitte 40, 41 zum jeweiligen Gegenstück dahingehend verändert, dass sich die Schlingfeder 34 ab einem gewissen Drehmoment am jeweiligen Gegenstück durchreibt.

Für die Drehrichtungsabhängigkeit der Bremswirkung der Bremseinheit 14 mit der Schlingfeder 34 sind die Durchmesser inklusive deren Toleranzen der beiden Zylinderabschnitte 40, 41, der Presshülse 38 und der Reibhülse 43 maßgeblich. Damit bei einer Ausfahrbewegung des inneren Hohlprofil-Elements 3 ein reduziertes Bremsmoment, insbesondere ein deutlich geringeres Bremsmoment als bei einer Einfahrbewegung, möglich ist, ist eine Aufpressung des ersten Innendurchmessers d₁ der Schlingfeder 34 mit dem ersten Zylinderabschnitt 40 zur Presshülse 38 deutlich geringer, als eine Aufpressung des zweiten Durchmessers d₂ der Schlingfeder 34 zur Reibhülse 43. Die Aufpressung ergibt sich aus den Durchmesserunterschieden, also insbesondere dem ersten Innendurchmesser d₁ des ersten Zylinderabschnitts 40 und einem Außendurchmesser der Presshülse 38 bzw. dem zweiten Durchmesser d₂ und dem Innendurchmesser der Reibhülse 43. Die Aufpressung ist umso größer, je größer der Durchmessunterschied ist. Beispielsweise ist der erst Innendurchmesser d₁ der Schlingfeder 34 im unmontierten Zustand um 0,2 mm kleiner als der Außendurchmesser der Presshülse 38. In diesem Fall liegt eine allenfalls geringe Überdeckung vor. Der zweite Außendurchmesser d₂ der Schlingfeder 34 ist im unmontierten Zustand um 0,8 mm größer ist als der Innendurchmesser der Reibhülse 43. Zwischen zweiten Zylinderabschnitt 41 und der Reibhülse 43 liegt eine vergleichsweise größere Überdeckung vor. Diese mehr oder weniger große Materialüberdeckung im montierten Zustand sorgt dann bei unterschiedlichen Drehrichtungen der Spindel für unterschiedliche Reibmomente. Durch eine unterschiedliche Materialauswahl der Reibhülse 43, der Presshülse 38 und der Schlingfeder 34 sowie deren Oberflächengüten werden diese zu erzielenden Reibmomente zusätzlich beeinflusst. Da diese Bremseinheit 14 auf Reibung basiert und damit auf Dauer einem Verschleißverhalten ausgesetzt ist, müssen die Reibungspartner auch dafür ausgelegt sein. Daher kann es beispielsweise erforderlich sein, die Presshülse 38 und die Reibhülse 43 aus gehärtetem Stahl und definierten Oberflächenrauigkeiten anzufertigen.

Das Ausfahren des inneren Hohlprofil-Elements 3 gegenüber dem äußeren Hohlprofil-Element 4 erfolgt stabil und insbesondere abgestützt. Die Gewindespindel 15 ist einerseits in der Lageningseinheit 31 gelagert. Zudem ist an dem freien Ende der Gewindespindel 15 das Abstützelement 23 als Spindelführung vorgesehen. Von dem inneren Hohlprofil-Element 3 eingeleitete Kräfte, die quer und insbesondere senkrecht zur Längsachse 5 wirken, werden unmittelbar auf die Abstützeinheit 28 in Form der Führungsbuchse übertragen.

Das Ausfahren des inneren Hohlprofil-Elements 3 der Vorrichtung 2 bewirkt ein Anheben des gesamten Systems 1, also des Tisches mit den Tischbeinen 7 und der darauf angeordneten Tischplatte 8.

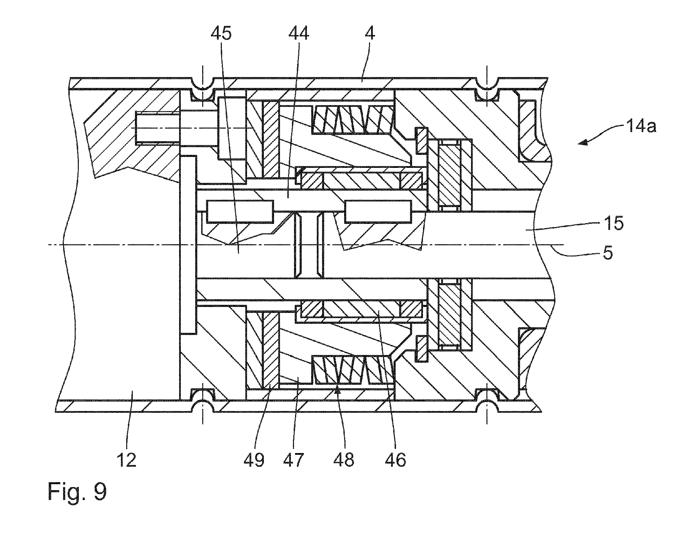

Im Folgenden wird unter Bezugnahme auf die Fig. 9 ein zweites Ausführungsbeispiel einer Bremseinheit beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Die Bremseinheit 14a ist ebenfalls drehrichtungsabhängig wirkend. Die Bremseinheit 14a weist eine Verbindungshülse 44 auf, die eine Abtriebswelle 45 des Elektromotors 12 mit der Gewindespindel 15 verbindet. An einer äußeren Zylindermantelfläche der Verbindungshülse 44 ist ein Freilauf 46 angeordnet und mit einer Reibmitnahme 47 verbunden. Die Reibmitnahme 47 wird durch ein Federelement 48 stirnseitig an einen ringscheibenförmigen Reibbelag 49 gedrückt und dadurch eine Reibungskraft verursacht. Je größer die in axialer Richtung wirkende Federkraft ist, desto höher ist auch das Reibmoment.

Der Freilauf 46 bewirkt, dass lediglich eine Drehbewegung in einer vorher festgelegten Drehrichtung um die Längsachse 5 von der Gewindespindel 15 und der Verbindungshülse 44 auf die Reibmitnahme 47 übertragen wird. Das bedeutet, dass eine Bremswirkung in der entgegengesetzten Drehrichtung nicht auftritt. Die Bremseinheit 14a ist drehrichtungsabhängig wirkend.

Eine derartige Bremseinheit ist aus der DE 10 2008 061 117 A1 grundsätzlich bekannt, worauf bezüglich weiterer Einzelheiten des konstruktiven Aufbaus und der Funktionsweise der Bremseinheit verwiesen wird. Überraschend wurde nun gefunden, dass diese Bremseinheit 14a mit Freilauf 46 vorteilhaft für die erfindungsgemäße Vorrichtung eingesetzt werden kann.

Es ist grundsätzlich denkbar, die Bremseinheit 14a drehrichtungsunabhängig wirkend auszuführen, sodass die Bremswirkung in beiden Drehrichtungen um die Längsachse 5 identisch ist. Dazu wird die Reibmitnahme 47 ohne den Freilauf 46 direkt mit der Verbindungshülse 44 gekoppelt, sodass jede Drehbewegung der Gewindespindel 15 eine Drehung der Reibmitnahme 47 und somit ein Reibmoment am Reibbelag 49 verursacht.

## Patentansprüche

1. Vorrichtung zum Höhenverstellen eines ersten Teils (6) gegenüber einem zweiten Teil (7), wobei die Vorrichtung (2) umfasst
a. ein erstes Hohlprofil-Element (3),
b. ein zweites Hohlprofil-Element (4), das entlang seiner Längsachse (5) gegenüber dem ersten Hohlprofil-Element (3) verlagerbar ist,
c. eine Antriebseinheit (11) zum Verlagern des zweites Hohlprofil-Elements (4) gegenüber dem ersten Hohlprofil-Element (3),
d. eine bezogen auf die Längsachse (5) zwischen dem ersten Hohlprofil-Element (3) und dem zweiten Hohlprofil-Element (4), angeordnete Abstützeinheit (28) zum Abstützen des ersten Hohlprofil-Elements (3) an dem zweiten Hohlprofil-Element (4).

2. Vorrichtung gemäß Anspruch 1, **dadurch gekennzeichnet, dass** die Antriebseinheit (11) einen Motor, insbesondere einen Elektromotor (12), aufweist.

3. Vorrichtung gemäß einem der vorstehenden Ansprüche, **dadurch gekennzeichnet, dass** die Antriebseinheit (11) ein Getriebe (13) aufweist.

4. Vorrichtung gemäß einem der vorstehenden Ansprüche, **dadurch gekennzeichnet, dass** die Antriebseinheit (11) eine Gewindespindel (15) und eine zu der Gewindespindel (15) korrespondierende Spindelmutter (16) aufweist.

5. Vorrichtung gemäß einem der vorstehenden Ansprüche, **gekennzeichnet durch** eine, insbesondere drehrichtungsabhängig wirkende, Bremseinheit (14; 14a).

6. Vorrichtung gemäß einem der vorstehenden Ansprüche, **gekennzeichnet durch** eine Verdrehsicherung (25, 26) zum Verhindern eines Verdrehens des zweites Hohlprofil-Elements (4) gegenüber dem ersten Hohlprofil-Element (3) um die Längsachse (5).

7. Vorrichtung gemäß Anspruch 6, **dadurch gekennzeichnet, dass** die Verdrehsicherung (25, 26) ein entlang der Längsachse (5) verlagerbares Element, insbesondere eine Spindelmutter (16), mit einer senkrecht zur Längsachse (5) unrunden Elementkontur aufweist, wobei das verlagerbare Element insbesondere mit einer Haltestruktur, insbesondere dem zweite Hohlprofil-Element (4), zusammenwirkt, die eine der Elementkontur korrespondierende Haltestrukturkontur aufweist.

8. Vorrichtung gemäß Anspruch 7, **dadurch gekennzeichnet, dass** die Elementkontur bezogen auf die Längsachse (5) mindestens einen radial vorstehenden Fühningssteg (25) und die Haltestrukturkontur jeweils eine zu dem mindestens einen Fühningssteg (25) korrespondierende Führungsnut (26) aufweist.

9. Vorrichtung gemäß einem der vorstehenden Ansprüche, **dadurch gekennzeichnet, dass** die Abstützeinheit (28) eine Führungsbuchse aufweist, die insbesondere stirnseitig an dem zweiten Hohlprofil-Element (4) befestigt ist.

10. Vorrichtung gemäß einem der vorstehenden Ansprüche, **dadurch gekennzeichnet, dass** die Abstützeinheit (28) als Axialanschlagelement für die Verlagerung des ersten Hohlprofil-Elements (3) gegenüber dem zweiten Hohlprofil-Element (4) dient.

11. Vorrichtung gemäß einem der vorstehenden Ansprüche, **gekennzeichnet durch** eine Encordereinheit (17) zum, insbesondere elektrischen, Kontaktieren der Antriebseinheit (11).

12. Vorrichtung gemäß einem der vorstehenden Ansprüche, **gekennzeichnet durch** eine Lageningseinheit (31) zum Aufnehmen von bezogen auf die Längsachse (5) radial und/oder axial gerichteten Kräften, die insbesondere **durch** die Antriebseinheit (11) eingeleitet werden.

13. Nachrüstsatz für eine Vorrichtung (2) nach einem der vorstehenden Ansprüche umfassend
a. eine in dem ersten Hohlprofil-Element (3) und/oder in dem zweiten Hohlprofil-Element (4) anordenbare Antriebseinheit (11) zum Verlagern des zweites Hohlprofil-Elements (4) gegenüber dem ersten Hohlprofil-Element (3) und
b. eine bezogen auf die Längsachse (5) zwischen dem ersten Hohlprofil-Element (3) und dem zweiten Hohlprofil-Element (4) anordenbare Abstützeinheit (28).

14. Höhenverstellbares System (1) umfassend
a. mindestens ein erstes Teil (6),
b. mindestens ein gegenüber dem ersten Teil (6) höhenverstellbares zweites Teil (7),
c. mindestens eine Vorrichtung (2) nach einem der Ansprüche 1 bis 12 zum Höhenverstellen jeweils eines ersten Teils (6) gegenüber jeweils einem zweiten Teil (7),
wobei das erste Hohlprofil-Element (3) einer Vorrichtung (2) mit dem ersten Teil (6) verbunden ist,
wobei das zweite Hohlprofil-Element (4) einer Vorrichtung (2) mit dem zweiten Teil (7) verbunden ist.

15. Höhenverstellbares System (1) nach Anspruch 14, **gekennzeichnet durch** eine Steuerungseinheit zum Steuern der Antriebseinheiten (11) für eine lineare Höhenverstellung des Systems (1).
